# EUROPEAN PATENT APPLICATION

(11) **EP 4 488 056 A1**
(43) Date of publication of application: **08.01.2025**
(21) Application number: 23183476.3
(22) Date of filing: 05.07.2023
(51) Int. Cl.: B32B 5/20, B32B 15/10, B32B 15/12, B32B 21/02, B32B 21/04, B32B 21/06, B32B 21/13, B32B 23/04, B32B 23/06, B32B 27/36, B32B 15/18, B32B 5/02

(54) **PANELS WITH LAYERED STRUCTURE**

(71) Applicant: Covestro (Netherlands) B.V., 6167 RD Geleen (NL)
(72) Inventor: Udding, Henk-Jan, 8014 AK Zwolle (NL); de Knoop, Erik, 7433 CR Schalkhaar (NL)
(74) Representative: Levpat

(57) **Abstract**

The present application provides a panel having a layered structure comprising,
a) a substrate having an upper surface and a lower surface,
b-i) an adhesive layer A is present onto which an adhesive layer B is adhered,
or
b-ii) an adhesive layer B is present onto which an adhesive layer A is adhered,
wherein the adhesive layer A in b-i) and b-ii) comprises a thermoplastic hot melt adhesive and the adhesive layer B in b-i) and b-ii) comprises an adhesive different to the adhesive of the adhesive layer A,
c) a surface cover on the adhesive layer B in case of b-i) or on the adhesive layer A in case of b-ii).

## Description

The invention is directed to panels having a layered structure comprising two layers of adhesive, the preparation of such panels as well as the use of the panels for furniture, building environments or transportation.

In the manufacture of furniture, cabinets, household articles, counter tops, floor, and wall decorations and the like, it is known to use panels to which a surface covering such as a laminate is provided in order to provide for a functional and decorative surface. The surface covering typically consists of a sheet material that is adhered to one or more of the planar portions of the panel. The surface covering provides for an aesthetic and durable use of the panel. In recent years, a lot of attention has gone to developing sustainable laminates for covering panels which led i.a. to the development of new types of high pressure laminates (HPL, produced by saturating multiple layers of kraft paper with phenolic resin), thermally fused laminates (TFL, wherein a resin-impregnated sheet of décor paper is fused directly to a panel), new types of decorative papers and foils (mostly pre-impregnated with a blend of melamine, acrylic and urea resins) and new types of rigid thermoformable foils (RTF, thermoplastic 2D and 3D coverings). Also, a lot of development has gone into finding alternatives for wood as a resource for making panels. Panels made of the fibrous residue of sugarcane, beets, grain, or panels made of paper waste, stone, recycled and recovered wood materials etc. have been described in the art, aiming at a design that has a lower impact on the availability of natural resources.

Recycling of panels durably provided with a surface covering typically takes place by shredding the panels, form a (mixed) particulate material and use this material to form new sheet shaped material (see e.g. US 20140075874). However, the new material, due to the mixed content of panel material and surface covering material, is typically of a lower quality then any of the starting materials as such. Another technique used is to simply mill the surface covering of the panel, enabling up to about 85% of the panel material to be reused again.

WO 2019/101761 A1 discloses an object having an adhesive layer of hot melt between a panel and a surface cover. By heating the hot melt adhesive to a temperature above its melting temperature, it is possible to separate the surface covering from the panel for recycling the object.

However, the surface covering in WO 2019/101761 A1 is applied to the panel by heating the hot melt adhesive to a temperature above its melting temperature and subsequently pressing the surface cover against the panel. This process is not suitable for every surface cover due to the high temperature and/or pressure necessary during the production of a panel according to WO 2019/101761 A1 which might damage heat- and/or pressure-sensitive surface covers, resulting in further waste. Further, on some materials suitable as substrates or surface covers there is no adhesion of thermoplastic hot melt adhesives, thus, thermoplastic hot melt adhesives are not suitable for every substrate and surface cover.

Besides these drawbacks, manufacturers of panels in general use laminators for panel production, thus, investment in additional equipment is needed.

Therefore, the object of the present invention is to provide a panel and a process for producing such a panel wherein the surface cover is reusable without adapting common processes comprising laminators and reducing waste during the production. In a preferred embodiment, the provided panel has further an increased bonding strength.

The objective is solved by a panel having a layered structure comprising,
a) a substrate having an upper surface and a lower surface,
b-i) an adhesive layer A is present onto which an adhesive layer B is adhered,
   or
b-ii) an adhesive layer B is present onto which an adhesive layer A is adhered,
   wherein the adhesive layer A in b-i) and b-ii) comprises a thermoplastic hot melt adhesive and the adhesive layer B in b-i) and b-ii) comprises an adhesive different to the adhesive of the adhesive layer A,
c) a surface cover on the adhesive layer B in case of b-i) or on the adhesive layer A in case of b-ii).

The *panel* is a solid, self-supporting (dimensionally stable) substantially two dimensional object, i.e. a broad and thin, having length and width dimensions that are at least 10 times larger than its height dimension, preferably 20 to 10000, more preferably 40 to 1000, most preferably 100 to 1000 times longer or wider than its height (i.e. it's thickness in the direction of its smallest dimension), which object is typically but not necessarily rectangular, typically but not necessarily flat (the panel may be curved, corrugated, etc.), and usually forms or is set into the surface of a larger object such as a door, a wall, a ceiling, a piece of furniture, a tray etc. A panel intrinsically has stable dimensions but depending on its thickness a panel may be marginally flexed under stress. The panels according to the invention are preferably used for furniture, like kitchen cabinets, building environment, like flooring, ceilings or doors, and transportation. Typical weights for panels suitable for furniture are between 1 and 20 kg/m², in particular between 1 and 10 kg/m² (as opposed to for example veneer or other surface laminates which have weights in the order of 0.4 to 0.8 kg/m²).

In a preferred embodiment, the panel has a surface larger than 0.3 m² and less than 10 m², more preferred larger than 0.5 m² and less than 5 m².

The *substrate* has an upper surface and a lower surface wherein at least onto the upper surface an adhesive layer A or an adhesive layer B is applied to. It is also possible that an additional adhesive layer A or adhesive layer B is applied onto the lower surface of the substrate, and subsequently an adhesive layer A, in case that an adhesive layer B is present on the substrate, or an adhesive layer B, in case that an adhesive layer A is present on the substrate, and a surface cover. Materials suitable as substrate are wood-based substrates, for example oriented strand boards (OSB), (bio-based) particle board, medium density fiberboards (MDF), cellulosic fibers or solid wood, polyurethane, polyethylene, rubber or metal plates. It is preferred that the substrate is a wood-based substrate. The wood-based substrate is preferably a particle board or a medium or high density fiberboard.

The adhesive layer A comprises a thermoplastic hot melt adhesive. Thermoplastic hot melt adhesives are non-reactive and are designed to be melted, i.e. heated to above a melting temperature to transform from a solid state into a liquid state and to adhere materials after solidification. Useful thermoplastic hot melt adhesives suitable for use in the adhesive layer A may comprise a Polymer P present as a main constituent, preferably in an amount of at least 50% by weight of the adhesive composition, more preferably comprises at least 60% and most preferred at least 80% of Polymer P by weight of the adhesive composition. Polymer P is a thermoplastic polymer that is at least partly crystalline, preferably Polymer P is semi crystalline.

By "crystalline" is meant herein that polymer has a melting enthalpy (ΔHm) of at least 5 J/g, preferably at least 8 J/g, more preferably of at least 10 J/g, most preferably at least 15 J/g. A person skilled in the art would appreciate that many crystalline materials are not fully crystalline but have a degree of crystallinity which is less than 100%, preferably from 2 to 98%, more preferably from 5 to 90 %, most preferably from 10 to 80%. Such materials comprise a mixture of phases such as domains of amorphous material and domains of crystalline material (e.g. where polymer chains are substantially aligned) and are often referred to by the informal term "semi-crystalline". The different domains can be seen for example under a polarised light microscope and/or by transmission electron microscopy (TEM). The degree of crystallinity of a `semi-crystalline' material may be measured by any suitable method such as by measuring density, by differential scanning calorimetry (DSC), by X-ray diffraction (XRD), by infrared spectroscopy and/or by nuclear magnetic resonance (NMR).

Polymer P may have a melting point from 40 to 250°C where the polymer is other than polyamide and where Polymer P comprises polyamide a melting point from 40 to 215°C. Usefully Polymer P has a melting point from 40 to 200°C, more usefully from 40 to 150°C and most usefully from 70 to 120°C, for example about 110°C.Polymer P may have a glass transition temperature below 100°C, advantageously below 80°C, more advantageously below 70°C, even more advantageously below 50°C and most advantageously below 40°C.

Polymer P may have a melt viscosity (all measured at 150°C) of less than 500 Pa.s, usefully less than 300 Pa.s, more usefully less than 200 Pa.s, most usefully less than 100 Pa.s.

Polymer P is preferably a polyester, like polyester polyol or poly(ester amides). Although polyesters can be produced without the formation of a condensation, e.g. by polymerising epoxides with anhydrides, generic (co)polyester-amide may be formed by the condensation reaction of for example molecules having acid or anhydride functionalities with molecules having alcohol and/or amine functionalities. Thus, for example polycondensation of suitable polyfunctional acids (preferably diacids) with suitable polyols (preferably diols or (mixtures with) tri- or tetrafunctional alcohols) or polycondensation of hydroxy acids can produce polyesters. Also ring opening polymerization of cyclic esters, such as caprolactone, pentadecalactone, ambrettolide and similar materials can produce polyesters. Similarly, polycondensation of suitable poly functional acids (preferably diacids) with suitable polyamines (preferably diamines or mixtures with trifunctional amines) or polycondensation of amino acids can produce polyamides. Ring opening polymerisation of cyclic amides, such as caprolactam, laurolactam and similar materials can produce polyamides. Analogously polycondensation of suitable poly functional acids (preferably diacids) with suitable polyamino alcohols (preferably dialkanol amine), polyols (preferably diols) and/or polyamines (preferably diamines) can produce poly(ester amides). Polyester amides can also be produced by (co)polymerization of lactones and/or lactams (as described herein). By having more than one of such functional groups on one molecule, polymers may be formed. If an amine such as dialkanol amine is used the resulting polyester resin is generally named as "polyester amide". By having even more functional groups on one molecule it is possible to form hyperbranched polyesters.

Preferred amines and derivatives thereof that may be used to obtain a Polymer P comprise any alkyl-, alkanol-, alkoxyalkyl-, di- and polyamines, as well as amino acids, lactams and similar materials; ethylene diamine, butylene diamine, hexamethylene diamine, isophorone diamine, 2-Methylpentamethylenediamine, 1,3-pentanediamine, dimer fatty diamine (e.g. available from Croda under the trade mark Priamine^{®}), ethanolamine, diethanol amine, isopropanol amine, diisopropanol amine, caprolactam, laurolactam, lysine, glycine and/or glutamine.Thus, it is well known that polyesters, which contain carbonyloxy (i.e. -C(=O)-O-) linking groups may be prepared by a condensation polymerisation process in which monomers providing an "acid component" (including ester-forming derivatives thereof) are reacted with monomers providing a "hydroxyl component".

The monomers providing an acid component may be selected from one or more polybasic carboxylic acids such as di- or tri-carboxylic acids or ester-forming derivatives thereof such as acid halides, anhydrides or esters. The monomers providing a hydroxyl component may be one or more polyhydric alcohols or phenols (polyols) such as diols, triols, etc. It is to be understood, that the polyester described herein may optionally comprise autoxidisable units in the main chain or in side chains, and such polyesters are known as autoxidisable polyesters. If desired the polyesters may also comprises a proportion of carbonylamino linking groups - C(=O)-NH- (i.e. amide linking group) or -C(=O)-N-R²- (tertiary amide linking group) by including an appropriate amino functional reactant as part of the hydroxyl component or alternatively all of the hydroxyl component may comprise amino functional reactants, thus resulting in a polyester amide resin. Such amide linkages are in fact useful in that they are more hydrolysis resistant.

There are many examples of carboxylic acids (or their ester forming derivatives such as anhydrides, acid chlorides, or lower (i.e. C₁₋₆)alkyl esters) which can be used in polyester synthesis for the provision of the monomers providing an acid component. Examples include, but are not limited to monofunctional acids such as (alkylated) benzoic acid and hexanoic acid; and C₄₋₂₀ aliphatic, alicyclic and aromatic dicarboxylic acids (or higher functionality acids) or their ester-forming derivatives. Preferred examples of suitable acids and derivatives thereof that may be used to obtain a polyester comprise any of the following: adipic acid, fumaric acid, maleic acid, citric acid, succinic acid, itaconic acid, azelaic acid, sebacic acid, suberic acid, pimelic acid nonanedioic acid, decanedioic acid, 1,4-cyclohexanedicarboxylic acid, 1,3-cyclohexanedicarboxylic acid, 1,2-cyclohexanedicarboxylic acid, terephthalic acid, isophthalic acid, sulfoisophthallic acids and/or metal salts thereof (e.g. 5-sodiosulpho isophthalic acid), phthalic acid , tetrahydrophthalic acid, 2,5-furanedicarboxylic acid (FDCA), any suitable mixtures thereof, combinations thereof and/or any suitable derivatives thereof (such as esters, e.g. di(C₁₋₄alkyl) esters, metal salts and/or anhydrides). Suitable anhydrides include succinic, maleic, phthalic, trimellitic and hexahydrophthalic anhydrides. More preferred (co)polyesters may be obtained from the following acids: terephthalic acid, isophthalic acid, succinic acid, suberic acid, pimelic acid, adipic acid, fumaric acid, maleic acid, itaconic acid, dimer fatty acid, sebacic acid, azelaic acid, sulfoisophthallic acid (and/or its metal salt), 1,3-cyclohexanedicarboxylic acid, 1,4-cyclohexane dicarboxylic acid, 2,5-furane dicarboxylic acid, trimellitic anhydride, esters thereof (e.g. dialkyl esters thereof), combinations thereof and/or mixtures thereof.

Similarly, there are many examples of polyols which may be used in (optionally autoxidisable) polyester resin synthesis for the provision of the monomers providing a hydroxyl component. The polyols preferably have from 1 to 6 (more preferably 2 to 4) hydroxyl groups per molecule. Suitable monofunctional alcohols include for example eicosanol and lauryl alcohol. Suitable polyols with two hydroxy groups per molecule include diols such as 1,2-ethanediol, 1,3-propanediol, 1,4-butanediol, 2,3-butanediol, 1,6-hexanediol, 2,2-dimethyl-1,3- propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols with three hydroxy groups per molecule include triols such as trimethylol propane (TMP) and 1,1,1-tris (hydroxymethyl)ethane (TME). Suitable polyols with four or more hydroxy groups per molecule include bis-TMP, pentaerythritol (2,2-bis(hydroxymethyl)-1,3-propanediol), bis-pentaerythritol and sorbitol (1,2,3,4,5,6-hexahydroxyhexane). Examples of hydroxyl functional amines with both hydroxyl functionality and amine functionality are described in, for example, WO 00/32708, use of diisopropanol amine is preferred. These can be used to prepare polyester amide resins.

Elastomeric polyols may also be used as building blocks to prepare the Polymer P (e.g. a polyester) and suitable polyols may comprise dihydroxy-terminated polytetrahydrofuran (polyTHF), dihydroxy-terminated polypropylene glycol, dihydroxy-terminated polybutylene succinate, dihydroxy-terminated polybutylene adipate; other aliphatic polyesters with Tg below zero and two OH end groups; and/or any mixtures thereof and/or any combinations thereof. Examples of suitable copolyester elastomers that may be obtainable and/or obtained from such polyols are those available from DSM under the trade mark Arnitel^{®}.

Preferred examples of suitable alcohols that may be used to obtain a polyester Polymer P comprise any of the following; isosorbide, ethylene glycol, 1,2-propanediol, 1,3-propandiol, 1,5-pentanediol, neopentyl glycol, diethylene glycol, triethylene glycol, 1,8-octanediol, 2,2,4-trimethyl-1,3pentanediol, polyethylene glycol, polypropylene glycol, 2,2,4,4-tetramethyl-1,3-cyclobutanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, 2,3-butanediol (e.g. from a renewable source) 1,5-pentanediol, 1,6-hexandediol, 1,4-butanediol, dimer fatty acid diol, glycerol, pentaerythrithol, di-pentaerythritol, any suitable combinations and/or mixtures thereof.

In yet another embodiment the (co) polyester may be built up from an acid selected from terephthalic acid, isophthalic acid, succinic acid, suberic acid, pimelic acid, adipic acid, fumaric acid, maleic acid, itaconic acid, dimer fatty acid, sebacic acid, azelaic acid, sulfoisophthallic acid or its metal salt, 1,3-cyclohexanedicarboxylic acid, 1,4-cyclohexane dicarboxylic acid, furane dicarboxylic acid, trimellitic anhydride and/or dialkyl esters thereof, mixtures thereof together with an alcohol selected from: ethylene glycol, 1,2-propanediol, 1,3-propandiol, 1,5-pentanediol, neopentyl glycol, diethylene glycol, triethylene glycol, 1,8-octanediol, 2,2,4-trimethyl-1,3-pentanediol, polyethylene glycol, polypropylene glycol, 2,2,4,4-tetramethyl-1,3-cyclobutanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-Butanediol, 2,3-butanediol, 1,5-pentanediol, 1,6-Hexandediol, 1,4-butanediol, dimer fatty acid diol, glycerol, pentaerythrithol, di-pentaerythritol and/or mixtures thereof. Dimer fatty acids, dimer fatty diols and/or dimer fatty diamines (e.g. available from Croda) may also be used as potential building blocks to obtain Polymer P.

In a preferred embodiment, the Polymer P is a polyester obtained by reaction of an alcohol compound selected from ethylene glycol, butanediol, hexanediol, diethylene glycol, polyethylene glycol or mixtures thereof, with a carboxylic acid compound or the corresponding anhydride selected from terephthalic acid, isophthalic acid, fumaric acid, adipic acid, succinic acide or mixtures thereof.

The esterification polymerisation processes for making the polyester for use in the invention composition are well known in the art and need not be described here in detail. Suffice to say that they are normally carried out in the melt optionally using catalysts such as titanium- or tin-based catalysts and with the provision for removing any water (or alcohol) formed from the condensation reaction. Preferably if the polyester resin comprises carboxylic acid functionalities, they are derived from a polyacid and or anhydride.

Preferably the weight average molecular weight (Mw) of the Polymer P is < 500000 g/ mol, more preferably < 250000 g/mol and most preferably < 100000 g/mol. Preferably the weight average molecular weight (Mw) of the Polymer P is > 1000 g/mol more preferably > 3500 g/mol and most preferably > 5000 g/mol. Preferably the weight average molecular weight (Mw) of the Polymer P is from 100 to 500000 g/mol, more preferably from 3500 to 250000 g/mol and most preferably from 5000 to 100000 g/mol. Preferably the number average molecular weight (Mn) of the Polymer P is < 300000 g/ mol, more preferably < 100000 g/mol and most preferably < 50,000 g/mol. Preferably the number average molecular weight (Mn) of the Polymer P is > 500 g /mol more preferably > 1000 g/mol and most preferably > 2000 g/mol. Preferably the number average molecular weight (Mn) of the Polymer P is from 100 to 300000 g/mol, more preferably from 500 to 100000 g/mol and most preferably from 2000 to 50000 g/mol.

The molecular weight distribution (MWD) of the polymer may influence properties such as the equilibrium viscosity of the compositions comprising them. MWD is conventionally described by the polydispersity index (PDI). PDI is defined as the weight average molecular weight divided by the number average molecular weight (Mw/Mn) where lower values are equivalent to lower PDI's. Preferably the value of PDI is < 30, more preferably < 15, most preferably < 10 and especially < 5.

The (co)polyester and other resins described herein as suitable for Polymer P may also comprise acidic moiet(ies) other than carboxylic acid moieties for example where the resin is prepared from a strong acid such as sulfonated acids, phosphonated acids, derivatives thereof (e.g. esters) and/or salts thereof (e.g. alkali metal salts). Preferred non-carboxylic acid moiet(ies)comprises neutralized or partially neutralized strong acid group selected from sulfonated moieties, phosphonated moieties and/or derivatives thereof, more preferably is an aromatic sulfonated acid or salt thereof, most preferably is an alkali metal sulfo salt of a benzene dicarboxylic acid, for example is represented by formula:

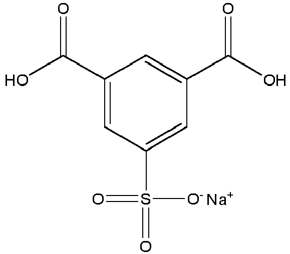

### Sodium salt of 5-(sulfo)isophthalic acid (SSIPA)

In addition, the polyester amide resin or urethanised polyester(-amide) resin preferably has a carbonyl amine content (defined as the presence of NH-C=O or N-C=O in mmoles/100 g solid resin) of less than 500 mmoles/100 g solid resin, more preferably less than 400 mmoles/100 g solid resin, most preferably less than 300 mmoles / 100 g solid resin and especially less than 225 mmoles/100 g solid resin.

In one embodiment Polymer P comprises a (co)polyester, characterised in that the (co)polyester is obtained and/or obtainable from reacting at least one acid selected from terephthalic acid, 2,5-furanedicarboxylic acid, adipic acid, fumaric acid, dimer fatty acid, sebacic acid, azelaic acid, succinic acid, and/or combinations thereof with at least one alcohol selected from ethylene glycol, 1,6-hexanediol, 1,4-butanediol, dimer fatty acid diol and/or combinations thereof. Usefully the hot melt adhesive used in the present invention comprises (in addition to the Polymer P) up to maximally 50 % by weight of optional ingredients selected from, tackifiers, waxes, plasticizers, nucleating agents, anti-static agents, neutralising agents, adhesion promoters, pigments, dyes, emulsifiers, surfactants, thickeners, heat stabilisers, levelling agents, anti-cratering agents, fillers, sedimentation inhibitors, UV absorbers, antioxidants, dispersants, defoamers, co-solvents, wetting agents, reactive diluents and the like and/or combinations thereof introduced at any stage of the production process or subsequently. Preferably, the hot melt adhesive used in the present invention does not comprise metal fillers. If present any reactive diluents have an Mn > 1000 g/mol, more preferably > 1500 g/mol and most preferably > 2000 g/mol and preferably an Mn < 5000 g/mol, more preferably < 4000 g/mol and especially < 3500 g/mol. It is also possible to include fire retardants like antimony oxide in the adhesive to enhance the fire-retardant properties of the adhesive.

Some non-limiting examples of tackifiers include tall oil, gum or wood rosin either unmodified, partially hydrogenated, fully hydrogenated or disproportionated, polymerized rosins, rosin derivatives such as rosin esters, phenolic modified rosin esters, acid modified rosin esters, distilled rosin, dimerised rosin, maleated rosin, and polymerized rosin; hydrocarbon resins including aliphatic and aromatic resins, coumarone-indene resins, polyterpenes, terpene-phenolic resins, maleic resins, ketone resins, reactive resins, hybrid resins and polyester resins.

Plasticisers can be used to reduce the glass transition temperature (Tg) of the polymer. Some non-limiting examples of a plasticizer include benzoate esters, phthalate esters, citrate esters, phosphate esters, terephthalate esters, isophthalate esters, or combinations thereof. As is well known to a skilled person other suitable commercially available plasticisers can also be used to prepare hot melt adhesives for use in the present invention.

The adhesive also can comprise one or more compatible waxes to improve the bond strength, prevent or reduce cold flow, and to decrease set time. Some non-limiting examples are 12-hydroxystearamide, N-(2-hydroxy ethyl)-12-hydroxystearamide, stearamide, glycerine monostearate, sorbitan monostearate, 12-hydroxy stearic acid, N,N'-ethylene-bis-stearamide, hydrogenated castor oil, oxidized synthetic waxes, and functionalized synthetic waxes such as oxidized polyethylene waxes.

Nucleating agents may be used with the adhesive composition to modify and control crystal formation. The terms "nucleating agent" and "nucleator" are synonymous and refer to a chemical substance which when incorporated into polymers form nuclei for the growth of crystals in the polymer melt. Any incompatible material can serve as a nucleator provided that it rapidly separates into particles as the molten adhesive cools. There are a wide variety of organic and inorganic materials known as nucleating agents that skilled person would be able to select as suitable for use in the present invention. Low molecular weight polyolefins and/or olefinic ionomers with a melt temperature from 70°C to 130°C or talcum are non-limiting examples of suitable nucleating agents that could be used in the present invention.

In a more preferred embodiment, the hot melt adhesive in the adhesive layer A has a viscosity of less than 500 Pa.s, preferably < 250 Pa.s at 150°C; a melt temperature (also denoted Tₘ) of from 40 to 150°C; and a crystallisation temperature (also denoted T_{c}) of from 60 to 130 °C, and a crystallinity between 5% and 40%. Tₘ and T_{c} may be obtained by any suitable method such as Differential Scanning Calorimetry (DSC). If melting and/or crystallisation of a sample is observed over a temperature range, the Tₘ and/or T_{c} values are recorded as the peak (maximum) temperature observed in this range. The viscosity of a polymer adhesive can be measured by using a cone and plate viscometer (Brookfield CAP 2000+, available from Brookfield Ametek, Middleboro, MA, USA) with a 24 mm diameter spindle and a cone angle of 1.8 degrees (Brookfield Cap 2000+ spindle #4). Samples are heated to 150°C. At 150°C the spindle is lowered on the sample. The sample is measured at 21 rpm for 30 seconds. The viscosity is determined automatically by the viscometer's default algorithm.

The adhesive layer A has preferably a thickness of between 50 and 400 g/m². In particular the thickness is in the range of from 50 to 200 g/m², more preferably between 75 to 160 g/m². The adhesive layer A is preferably provided as such that the layer corresponds substantially to the complete region of overlap between the panel or the surface cover and the adhesive layer B. It is further preferred that the roughness of the adhesive layer A, measured by the maximum height Sz of the largest peak height value and the largest pit depth value according to ISO 25178, is in the range of from 0.2 mm to 0.5 mm, more preferably 0.330 mm to 0.355 mm and most preferably 0.340 mm to 0.350 mm.

The adhesive layer A is applied in solid or liquid form onto the substrate or the adhesive layer B. In the case that the adhesive is applied in solid form to the substrate, an additional heating step is necessary. The adhesive of the adhesive layer A is heated by using radiation, such as microwaves, infrared light or other types of radiation. If the adhesive of the adhesive layer A is applied in liquid form onto the substrate or the adhesive layer B, using a roller provided with a mass of liquid thermoplastic hot melt adhesive is preferred.

In yet a further embodiment, the layer of thermoplastic hot melt adhesive is cooled down to a temperature below the melting temperature of the thermoplastic hot melt adhesive of the adhesive layer A before the adhesive layer B is applied. The thermoplastic hot melt adhesive is preferably cooled down to room temperature which is in the range of from 15 to 25 °C. The substrate comprising an adhesive layer A which is cooled down to room temperature can then be stored and transported if necessary to another site for finishing the production of the panel.

The adhesive of the adhesive layer B is different to the adhesive of the adhesive layer A, for example a contact adhesive like styrene-butadiene rubber, waterborne dispersions or hot melt adhesives different to the adhesive of the adhesive layer A, like thermosetting hot melt adhesive. Preferably, the adhesive of the adhesive layer B is a hot melt adhesive different to the thermoplastic hot melt adhesive of the adhesive layer A, more preferably a thermosetting hot melt, and most preferably a thermosetting polyurethane hot melt adhesive.

The *surface covering* may be any object that can be used to cover a surface of a panel, such as veneer or other surface laminate, but it also may be another panel to form a multi-layer structure with the basic panel. The surface covering is preferably a foil, like high pressure laminate (HPL), an aesthetical material, like decorative paper, melamine décor on a decorative paper or cork, a solid wood, like a wood veneer, an insulation material, like polyurethane/polyisocyanurate foams (PUR/PIR-foams), or acoustic insulation materials based on polyethylene terephthalate, or inorganic materials, like tiles or metal plates.

In one embodiment the foil is an HPL, linoleum, a foil based on polyester and/or polyether, or a surface material based on starch or polylactic acid. In a more preferred embodiment, the foil is selected from the group consisting of bio-based HPL, linoleum, and bio-based surface materials based on starch or polylactic acid. Bio-based in this context means that the surface material is free from formaldehyde and comprises glues derived from renewable biological resources, like lignin.

In another embodiment the inorganic material as the surface covering is based on ceramic or steel, preferably the inorganic material is a ceramic tyle, sendzimir zinc steel or ceramic steel.

For separating the surface covering from the substrate, the panel is heated to a temperature above the melting temperature of the adhesive layer A using radiation, such as microwaves, infrared light or other types of radiation, or a heated press.

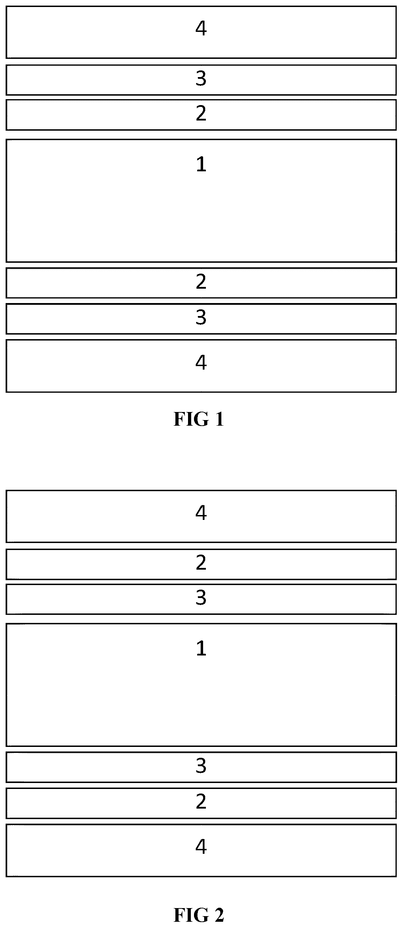

FIG 1 and 2 show preferred embodiments of the invention. In FIG. 1 the upper and lower surface of a substrate (1) is covered by an adhesive layer A (2), followed by an adhesive layer B (3). A surface cover (4) is adhered onto the adhesive layer B (3).

In FIG 2 the upper and lower surface of a substrate (1) is covered by an adhesive layer B (3), followed by an adhesive layer A (2). A surface cover (4) is adhered onto the adhesive layer A (2).

### Examples

| | |
|---|---|
| Substrate | 500x500x16 mm particle board (Organic Board from Pfleiderer) |
| Adhesive A | thermoplastic hot melt adhesive, based on polyester |
| Adhesive B | Thermosetting polyurethane (PUR) hot melt adhesive |

Dolly pull off test was carried out according to ASTM D 4541.

The roughness parameter Sz was measured according to the standard ISO 25178.

### Examples 1 to 3

Adhesive A was applied to the substrate in a laminator with a roller coater in an amount of 100, 140 and 170 g/m². The adhesion of the adhesive layer A to the substrate was tested with a dolly pull off adhesion tester.

Dolly pull off tests showed that the point of failure is within the substrate. The adhesion of Adhesive A is better than the internal bond strength of the substrate.

On the adhesive layer A the Adhesive B was applied in a laminator by a roller coater with a temperature of above 170°C and a line speed of 35 m/min. An HPL as surface cover was applied on the adhesive layer Bin the laminating line and an edge band via laser technology.

Dolly pull off tests were carried out from the panels obtained in examples 1 to 3. The results (see table 1) show that a specific roughness of adhesive layer A increases the bonding strength of the panel.

A second set of the panels were put into a press for 90 seconds by a temperature of 150°C and a pressure of 5 N/cm². For the panels of examples 1, 2 and 3, the surface covering comprising the adhesive layer B was removed from the substrate so that reuse of the separate parts was directly possible without any further processing.

**Table 1: Adhesion properties of panels with different amount of adhesion 1**

| Example | Amount adhesive A [g/m²] | Roughness Sz [mm] | Dolly pull off test [N/mm²] |
|---|---|---|---|
| 1 | 100 | 0.347 | 1.38* |
| 2 | 140 | 0.358 | 1.20** |
| 3 | 170 | 0.355 | 1.31** |

| | | | |
|---|---|---|---|
| * point of failure within substrate ** point of failure between surface cover and adhesive layer B | | | |

### Examples 4 to 16

For each example two panels were prepared. The first panel was obtained by applying 170 g/m² of adhesive A in solid state onto the substrate and putting the surface cover on top of adhesive A. The panel was then pressed at a temperature of 150°C and a pressure of 5 N/cm² for 90 seconds. After cooling the panel to room temperature, the panel was reviewed for visual quality, and it was tested if the surface cover adhered to the substrate or could be peeled off by hand. A second panel was prepared according to example 3, wherein an adhesive layer B was applied to the adhesive layer A prior to the surface cover. The visual quality of the second panels was in all cases good as well as the adhesion between the surface cover and the adhesive layer B.

Examples 5 to 9 and 15 show that for many surface covers it is not suitable to apply the surface cover directly onto the adhesive layer A due to a lack of heat-resistance. The surface covers of the obtained panels are damaged or shrinked because of the necessary heat which is applied to the surface cover due to adhesive A. The examples 7, 9 to 11 and 16 further show that several surface covers do not adhere to the adhesive layer A alone. Table 2 shows that the panel structure according to the invention improves the recyclability of panels with different surface covers.

**Table 2: Panels with different surface coverings**

| **Example** | **Surface material** | **Heat sensitive** | **Adhesion to adhesive A** | **Adhesion to adhesive B** |
|---|---|---|---|---|
| 4 | HPL (high pressure (paper) Laminate | No | Yes | Yes |
| 5 | Wood veneer (oak, bamboo, maple, etc.) | No, but high shrinkage (moisture) | Yes | Yes |
| 6 | Bio-based HPL | Yes | Yes | Yes |
| 7 | Starch based bio surface materials | Yes | limited | Yes |
| 8 | Linoleum (linseed oil based) Forbo top | Yes | Yes | Yes |
| 9 | PLA based biobased surface materials | Yes | limited | Yes |
| 10 | Ceramic steel by Polyvision | No | No | Yes |
| 11 | Sendzimir zinc steel | No | No | Yes |
| 12 | Cork | No | yes | Yes |
| 13 | PET acoustic materials | No | yes | Yes |
| 14 | PET/PES foils | No | No | Yes |
| 15 | PUR/PIR insulation materials | Yes | yes | Yes |
| 16 | Ceramic stone tyles | No | No | Yes |

## Claims

1. A panel having a layered structure comprising,
a) a substrate (1) having an upper surface and a lower surface,
b-i) an adhesive layer A (2) is present onto which an adhesive layer B (3) is adhered,
or
b-ii) an adhesive layer B (3) is present onto which an adhesive layer A (2) is adhered,
wherein the adhesive layer A (2) in b-i) and b-ii) comprises a thermoplastic hot melt adhesive and the adhesive layer B (3) in b-i) and b-ii) comprises an adhesive different to the adhesive of the adhesive layer A (2),
c) a surface cover (4) on the adhesive layer B (3) in case of b-i) or on the adhesive layer A (2) in case of b-ii).

2. A panel according to claim 1, wherein the thermoplastic hot melt adhesive comprises at least 50 wt.-% of semi-crystalline polymer with a crystallinity between 2 to 98%, a melting point in the range of from 40 to 180 °C and a melt viscosity of 500 Pa*s or less at a temperature of 150°C.

3. A panel according to claim 1 or 2, wherein the thermoplastic hot melt adhesive is a polyester.

4. A panel according to one of claims 1 to 3, wherein the adhesive layer B comprises a contact adhesive, a waterborne dispersion or a hot melt adhesive different to the hot melt adhesive of adhesive layer A (2).

5. A panel according to one of claims 1 to 3, wherein the adhesive layer B (3) comprises a thermosetting hot melt adhesive.

6. A panel according to claim 5, wherein the thermosetting hot melt adhesive is based on polyurethane.

7. A panel according to one of claims 1 to 6, wherein the adhesive layer A (2) has a roughness parameter Sz in the range of from 0.05 mm to 0.355 mm, measured according to ISO 25178.

8. A panel according to one of claims 1 to 7, wherein the adhesive layer A (2) is present on the upper and lower surface of the substrate.

9. A panel according to one of claims 1 to 8, wherein the surface (4) cover has a thickness of less than 1.0 cm.

10. A panel according to one of claims 1 to 9, wherein the surface cover (4) is a foil, an aesthetical material, solid wood, an insulation material, or an inorganic material.

11. A panel according to claim 10, wherein the inorganic material is ceramic steel, sendzimir zinc steel or ceramic stone tyles and wherein the foil is bio-based HPL, starch-based bio surface material, linoleum, PLA-based bio surface material or a foil based on polyethylene terephthalate, wherein the insulation material is a PUR/PIR foam, and wherein the aesthetical material is decorative paper, melamine décor on a decorative paper or cork.

12. Process for preparing a panel having a layered structure, comprising the steps
1) Providing a substrate (1) having an upper surface and a lower surface,
2-a) Applying an adhesive A onto at least the upper surface of the substrate to obtain an adhesive layer A (2), and subsequently applying an adhesive B onto the adhesive layer A to obtain an adhesive layer B (3),
or
2-b) Applying an adhesive B onto at least the upper surface of the substrate to obtain an adhesive layer B (3), and subsequently applying an adhesive A onto the adhesive layer B to obtain an adhesive layer A (2),
wherein the adhesive layer A (2) in 2-a) and 2-b) comprises a thermoplastic hot melt adhesive and the adhesive layer B (3) in 2-A) and 2-b) comprises an adhesive different to adhesive A,
3) Applying a surface cover (4) on the adhesive layer B (3) in case of 2-A) or on the adhesive layer A (2) in case of 2-B).

13. A process according to claim 12, wherein the adhesive A and the adhesive B are applied with a roller coater.

14. A process according to claim 12 or 13, wherein in a subsequent step
4) the adhesive A is re-heated to a temperature in the range of from 40 to 180 °C to separate the substrate (1) and the surface cover (4) for recycling or repairing the panel.

15. Use of a panel according to one of claims 1 to 11 for furniture, building environment or transportation.
